# EUROPEAN PATENT APPLICATION

(11) **EP 2 079 270 A1**
(43) Date of publication of application: **15.07.2009**
(21) Application number: 09000010.0
(22) Date of filing: 02.01.2009
(51) Int. Cl.: H04W 72/12

(54) **Method of receiving signaling and related communication device**

(30) Priority: 08.01.2008 US 19606 P
(71) Applicant: Innovative Sonic Limited, Tortola (VG)
(72) Inventor: Kuo, Richard Lee-Chee, Taipei City (TW)
(74) Representative: Weber, Joachim

(57) **Abstract**

A method of receiving signaling for a user equipment, hereinafter called UE, in a wireless communication system (10) is disclosed. The method includes starting to monitor a downlink control channel after a scheduling request procedure, used for requesting uplink radio resources, is triggered until the uplink radio resources are received (402).

## Description

This application claims the benefit of U.S. Provisional Application No. 61/019,606, filed on 01/08/2008 and entitled "Method and Apparatus for PDCCH Monitoring in a Wireless Communication System", the contents of which are incorporated herein.

The present invention relates to a method and apparatus for receiving a signaling according to the pre-characterizing clauses of claims 1 and 8.

The third generation mobile telecommunications system (called 3G system) provides high frequency spectrum utilization, universal coverage, and high quality, high-speed multimedia data transmission, and also meets all kinds of QoS requirements simultaneously, providing diverse, flexible, two-way transmission services and better communication quality to reduce transmission interruption rates.

A long-term evolution (LTE) system, initiated by the third generation partnership project (3GPP), is now being regarded as a new radio interface and radio network architecture that provides a high data rate, low latency, packet optimization, and improved system capacity and coverage. In the LTE system, an evolved universal terrestrial radio access network (E-UTRAN) includes a plurality of evolved Node-Bs (eNBs) and communicates with a plurality of mobile stations, also referred as user equipments (UEs).

General speaking, the UEs communicate with E-UTRAN, such as eNBs, by the radio resource allocation and acquire resources, allocated by E-UTRAN, for the uplink or downlink data transfer. There are two kinds of resource allocations for the UE (i.e. dynamic resources and predefined resources). The predefined resources use the radio resource control signaling for the resource allocation and periodically transmit a certain amount of data, for example, voice data. During periodic time intervals, the UE utilizes the allocated radio resources for the uplink and downlink data transfer. Further, the UE can achieve data swapping with the network. On the other hand, the dynamic resources are to allocate the radio resources to the UE dynamically, based on the number of the UEs in the same cell area. The UE has to monitor a physical downlink control channel (PDCCH) to find the possible allocation of dynamic resources for both downlink assignment and uplink grant.

In addition, in the LTE system, a discontinuous reception (DRX) functionality is controlled by a media access control (MAC) layer to confine the reception timing for the UE. When there is no data exchanging between the UE and the network, the UE just periodically wakes up to monitor the PDCCH, seeing if there is any downlink data waiting for transmission. If so, the UE executes the data reception. Otherwise, the UE goes back to the sleeping mode. Consequently, the power can be saved for the UE, and the standby time can be prolonged.

In cases of using the DRX functionality, whenever a new DRX cycle begins, an On Duration Timer is started and the UE is awaked to monitor the PDCCH until the On Duration Timer expires. In addition, when a DRX Inactivity Timer or a DRX Retransmission Timer is started, the UE also monitors the PDCCH.

In other words, the UE configured with the DRX functionality is allowed to stop monitoring the PDCCH during some period of time. The MAC specification defines the following four situations for the UE to monitor the PDCCH when the DRX functionality is configured. The four situations are described as follows:
(1). when the On Duration Timer is running.
(2). when the DRX Inactivity Timer is running.
(3). when the DRX Retransmission Timer is running.
(4). When the uplink grant for a retransmission is needed.

Besides, when having the uplink data to transmit, the UE, however, is not able to upload data if there is no uplink grant available for the UE. Thus, the UE invokes the scheduling request procedure through a physical uplink control channel (PUCCH) to request the uplink grant from the network for data transmissions. Once the UE acquires the uplink grant allocated by the network, the scheduling request procedure is terminated.

Therefore, according to the aforementioned rules for the PDCCH monitoring, after the scheduling request procedure is invoked if no other DRX timer is running, the uplink radio resources may not be available until the next on duration period, during which the On Duration Timer is running. Consequently, the uplink data transfer is delayed due to waiting.

To put it simply, according to the prior art, when there is no uplink grant available for the UE, the UE can not immediately monitor the PDCCH for the acquirement of the uplink grant, allocated by the network. This, hence, causes the transfer delay and reduces system efficiency.

This in mind, the present invention aims at providing a method and apparatus for receiving a downlink control signaling, so as to improve uplink transfer delay.

This is achieved by a method and apparatus for receiving a downlink control signaling according to claims 1 and 8. The dependent claims pertain to corresponding further developments and improvements.

As will be seen more clearly from the detailed description following below, the claimed method for receiving a control signaling for a user equipment (UE) in a wireless communication system, comprises after a scheduling request procedure for requesting uplink radio resources is trigged, starting to monitor a downlink control channel until the scheduling request procedure is terminated.

### Brief Description of the Drawings

Fig. 1 is a schematic diagram of a wireless communication system.
Fig. 2 is a functional block diagram of a wireless communication device.
Fig. 3 is a schematic diagram of the program shown in Fig.2.
Fig. 4 is a flowchart of a process according to an embodiment of the present invention.

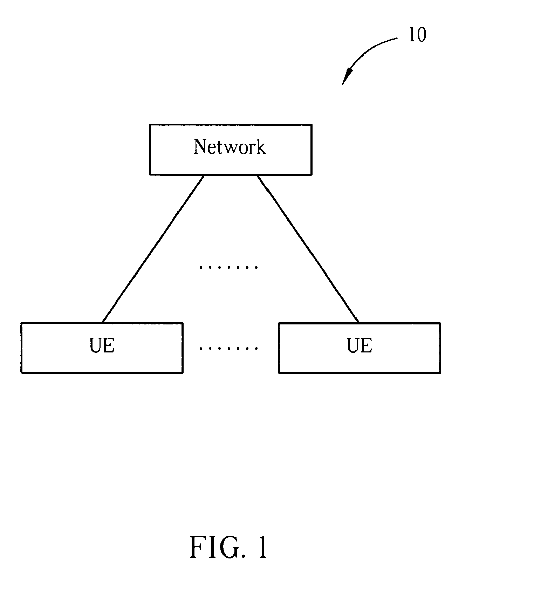

Please refer to Fig. 1, which is a schematic diagram of a wireless communications system 10. The wireless communications system 10 is preferred to be a Long Term Evolution (LTE) communications system, and is briefly formed with a network terminal and a plurality of user equipments. In Fig. 1, the network terminal and the user equipments are simply utilized for illustrating the structure of the wireless communications system 10. Practically, the network terminal may include a plurality of evolved base stations (eNBs), an evolved UMTS radio access network (EUTRAN) and so on according to actual demands, and the user equipments (UEs) can be apparatuses such as mobile phones, computer systems, etc.

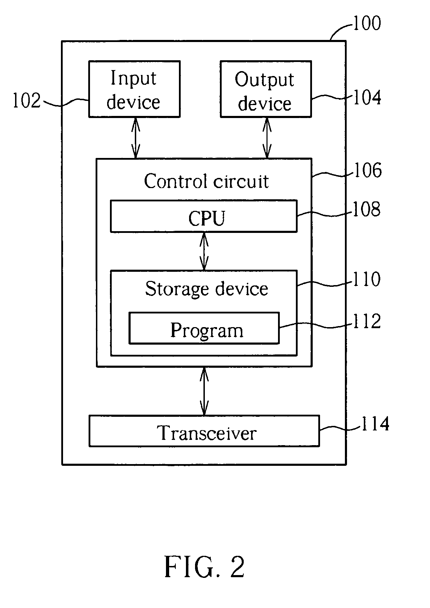

Please refer to Fig. 2, which is a functional block diagram of a communications device 100. The communications device 100 can be utilized for realizing the UEs in Fig.1. For the sake of brevity, Fig. 2 only shows an input device 102, an output device 104, a control circuit 106, a central processing unit (CPU) 108, a memory 110, a program 112, and a transceiver 114 of the communications device 100. In the communications device 100, the control circuit 106 executes the program 112 in the memory 110 through the CPU 108, thereby controlling an operation of the communications device 100. The communications device 100 can receive signals input by a user through the input device 102, such as a keyboard, and can output images and sounds through the output device 104, such as a monitor or speakers. The transceiver 114 is used to receive and transmit wireless signals, delivering received signals to the control circuit 106, and outputting signals generated by the control circuit 106 wirelessly. From a perspective of a communications protocol framework, the transceiver 114 can be seen as a portion of Layer 1, and the control circuit 106 can be utilized to realize functions of Layer 2 and Layer 3.

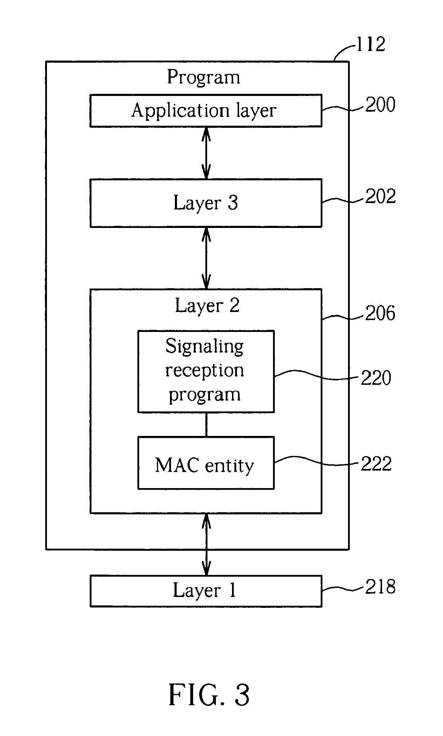

Please continue to refer to Fig. 3, which is a schematic diagram of the program 112 shown in Fig. 2. The program 112 includes an application layer 200, a Layer 3 202, and a Layer 2 206, and is coupled to a Layer 1 208. The Layer 2 206 includes a media access control (MAC) entity 222 capable of supporting discontinuous reception (DRX) functionality. The Layer 1 218 is a physical layer. The MAC entity 222 receives signals sent from the network through the physical layer, the Layer 1 208 and decodes the received signals. When the DRX functionality is executed by the MAC entity 222 according to Radio Resource Control (RRC) commands of the Layer 3 202, the layer 1 218 monitors a downlink control channel only during the on duration period. In addiction, an uplink grant, sent by the network through the downlink control channel, is needed for the communication device 100 when the uplink data is transmitted. In this situation, the program 112 provides a signaling reception program 220 for improving the uplink data transfer delay according to an embodiment of the present invention.

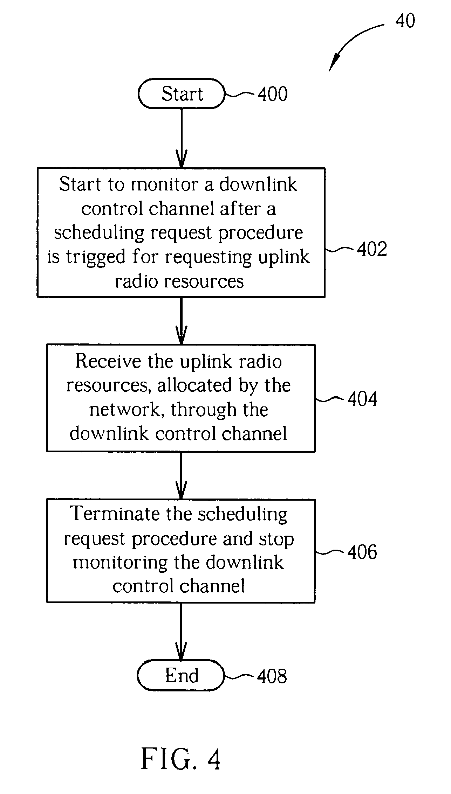

Please refer to Fig.4, which is a flowchart of a process 40 according to an embodiment of the present invention. The process 40 is used for receiving a signaling and improving the uplink data transfer delay for a UE of a wireless communication system and can be compiled into the DRX improving program 220. The process 40 includes the following steps:
- Step 400: Start.:
- Step 402:: Start to monitor a downlink control channel after a scheduling request procedure is trigged for requesting uplink radio resources.
- Step 404:: Receive the uplink radio resources, allocated by the network, through the downlink control channel.
- Step 406:: Terminate the scheduling request procedure and stop monitoring the downlink control channel.
- Step 408:: End.

According to the process 40, the UE starts to monitor the downlink control channel to avoid the uplink data transfer delay caused by waiting for the next on duration period after the scheduling request procedure is trigged for requesting uplink radio resources. The UE continues to monitor the downlink control channel until the UE acquires the uplink radio resource allocation from the network and terminates the schedule request procedure.

The downlink control channel, preferably, is a physical downlink control channel. The uplink radio resources, preferably, include an uplink grant. When the scheduling request procedure is ongoing, the UE sends a scheduling request signal periodically for requesting the uplink grant from the network.

Thus, after the scheduling request procedure is trigged, an embodiment of the present invention starts to monitor the downlink control channel and allows the network to allocate the uplink radio resources to the UE without waiting for the next on duration period such that the UE can acquire the uplink radio resources, allocated by the network, as soon as possible. So an embodiment of the present invention can reduce the uplink data transfer delay and avoid unnecessary waiting.

Please note that Fig.4 is a flowchart of a process according to one embodiment of the present invention which can be modified by those skilled in the art and thus not narrated herein. For example, if the scheduling request procedure is ongoing and the PDCCH indicates a new transmission, the UE starts or restarts a DRX Inactivity Timer.

To sum up, an embodiment of the present invention provides a method of receiving a signaling for improving the uplink data transfer delay. After the scheduling request procedure is trigged through the PUDCCH, the UE starts to monitors the PDCCH until the scheduling request procedure is terminated due to the uplink radio resources being acquired. Consequently, the UE can save waiting time, and further enhance system efficiency.

## Claims

1. A method of receiving a signaling for a user equipment, hereinafter called UE, in a wireless communication system (10), **characterized by** the method comprising:
starting to monitor a downlink control channel after a scheduling request procedure for requesting an uplink radio resource is trigged (402).

2. The method of claim 1, **characterized by:**
continuing to monitor the downlink control channel until the scheduling request procedure is terminated.

3. The method of claim 1, **characterized by:**
starting or restarting a discontinuous reception, hereinafter called DRX, inactivity timer when the downlink control channel indicates a new transmission during the scheduling request procedure.

4. The method of claim 1, **characterized in that** the scheduling request procedure is trigged when there is no radio resources for an uplink data transfer.

5. The method of claim 2**, characterized in that** the scheduling request procedure is terminated when the UE acquires the uplink radio resource allocated by a network.

6. The method of claim 1, **characterized in that** the scheduling request procedure sends a scheduling request signal via a physical uplink control channel, hereinafter called PUCCH.

7. The method of claim 1, **characterized in that** the downlink control channel is a physical downlink control channel, hereinafter called PDCCH.

8. A communication device (100) of a user equipment, hereinafter called UE, in a wireless communication system (10) for receiving a signaling, the communication device (100) comprising:
a processor (108), hereinafter called CPU, for executing a process (40); and
a storage device (110) coupled to the processor (108), for storing a program (112) for executing the process (40), **characterized in that** the process (40) comprises:
**characterized by** starting to monitor a downlink control channel after a scheduling request procedure for requesting an uplink radio resource is trigged (402).

9. The communication device (100) of claim 8, **characterized in that** the process (40) further comprises continuing to monitor the downlink control channel until the scheduling request procedure is terminated.

10. The communication device (100) of claim 8, **characterized in that** the process (40) further comprises starting or restarting a discontinuous reception, hereinafter called DRX, inactivity timer when the downlink control channel indicates a new transmission during the scheduling request procedure.

11. The communication device (100) of claim 8, **characterized in that** the scheduling request procedure is trigged when there is no radio resources for an uplink data transfer.

12. The communication device (100) of claim 9, **characterized in that** the scheduling request procedure is terminated when the UE acquires the uplink radio resource allocated by a network.

13. The communication device (100) of claim 8, **characterized in that** the scheduling request procedure sends a scheduling request signal via a physical uplink control channel, hereinafter called PUCCH.

14. The communication device (100) of claim 8, **characterized in that** the downlink control channel is a physical downlink control channel, hereinafter called PDCCH.
